(19) Europäisches Patentamt
European Patent Office
Office européen des brevets

(11) **EP 1 770 716 A2**

(12) **EUROPEAN PATENT APPLICATION**

(43) Date of publication:
**04.04.2007 Bulletin 2007/14**

(51) Int Cl.:
*G21C 17/032* (2006.01)

(21) Application number: **06255018.1**

(22) Date of filing: **28.09.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Engel, Ronald**<br>**San Jose, California 95120 (US)**<br>• **Brancato, Paul**<br>**San Jose, California 95127 (US)**<br>• **Kurtz, Rachel**<br>**Pacific Palisades, California 90272 (US)** |
| (30) Priority: **30.09.2005 US 239316** | (74) Representative: **Bedford, Grant Richard et al**<br>**London Patent Operation**<br>**GE International Inc**<br>**15 John Adam Street**<br>**London WC2N 6LU (GB)** |
| (71) Applicant: **General Electric Company**<br>**Schenectady, NY 12345 (US)** | |
| (72) Inventors:<br>• **Dayal, Yogeshwar**<br>**San Jose, California 95120 (US)** | |

(54) **Improved on-line steam flow measurement device and method**

(57) A system and method for determining a steam flow rate through a conduit of a boiling water reactor (BWR) having a first sensor (34) that is configured to generate a pressure signal based on a pressure at an inlet of a venturi (20) within the conduit, and a second sensor (32) that is configured to generate a delta pressure signal based on a pressure differential across the venturi. A processor (36) determines an instantaneous steam flow rate based on the pressure signal and the delta pressure signal.

Fig. 2

**Description**

The present invention relates to boiling water reactors (BWRs), and more particularly to measuring steam flow in a BWR.

Boiling water reactors (BWRs) generate electricity by converting water to steam, which drives a turbine. The steam is then converted back to water which is then fed back into the reactor. A BWR includes a reactor tank that contains the reactor's fuel (e.g., uranium) in the form of fuel rods collected into fuel elements or bundles. The fuel is cooled by feedwater that is pumped through the reactor core. Heat transfer from the fuel rods to the feedwater induces boiling of the feedwater to produce a water-steam mixture. The water-steam mixture is separated into water and steam in the steam separator and steam driers located above the reactor core. The dry steam is led to the turbine plant through steam lines to drive electric generators. The steam from the generators is condensed in a condenser and is cooled by a cooling medium (e.g., sea water, river water or water from a cooling tower) to be cycled again through the BWR.

Operation of the BWR is partially controlled based on the steam flow rate through the steam lines. Further, some protective actions, such as closing the main steam isolation valves, are also based on the measurement of high steam flow through the steam lines. Conventionally, a venturi is installed within each steam line and steam flow rate is determined based on the pressure difference across the venturi (i.e., between the venturi inlet and throat). A calibration constant based on dry steam and rated dome pressure is also used in the conventional steam flow measurement. This conventional steam flow rate measuring method, however, is not as accurate as desired. More specifically, although measurements based on the pressure difference across the venturi are accurate under normal steam flow conditions, these measurements become less accurate in conditions of high moisture content and/or high steam flow rates. Thus, an improvement in both control and protective functions could be achieved with more accurate steam flow measurements.

Further, the BWRs have the capability to operate at power levels which are higher than the original rated power. However, raising the power affects the performance of the BWR components (e.g., separators and dryer) used to dry the steam before entering the steam lines. Under these conditions, it is beneficial to know the change in moisture in the steam flowing through the steam lines to the turbine. Conventionally, the moisture content is measured by an off-line sampling which involves taking samples from the feedwater or steam lines and measuring the amount of radioactivity of soluble material (Na-24) which have been carried over from the water to steam. Accordingly, providing an on-line measurement of changes in steam line moisture would be highly desirable for the purposes of assuring that the separators and dryer are functioning properly under the uprated conditions.

Various embodiments of the present invention provide a system for measuring a steam flow rate through a conduit of a boiling water reactor (BWR). The system may include a first sensor that is configured to generate a pressure signal based on a pressure at an inlet of a venturi within the conduit, and a second sensor at the venturi throat that is configured to generate a delta pressure signal based on a pressure differential across the venturi. A processor determines the instantaneous steam flow rate in a steam line using the venturi $\Delta P$ signal and the signals from the pressure sensors in the BWR reactor dome and venturi inlet to compensate for the change in steam properties due to steam line pressure drop.

In an exemplary embodiment, the steam flow calculation may be based on solving the venturi $\Delta P$ equation in real-time.

In an exemplary embodiment, the measured steam flow may be sent to a control system for improved automatic BWR feedwater and water level control.

In an exemplary embodiment, the steam flow signal may be sent to a plant protection system for automatically initiating plant protection functions when the steam flow rate exceeds pre-determined safety limits.

In another exemplary embodiment, the feedwater and control rod drive water flow-in rate may be compared to the measured steam flow-out rate during normal steady state operation.

In another exemplary embodiment, the processor may continuously provide a margin to choke flow in the steam line.

In another exemplary embodiment, the margin to choke flow may be continuously monitored in real-time and sent to a control room operator for BWR plant diagnostics.

In an exemplary embodiment, the processor determines the total steam flow rate based on the individual measured steam flow rates, and compares the flow rates to the total of all the BWR water flow-in rates to provide a diagnostic tool to assure that water flow-in and steam flow-out mass flows match for normal steady state operation.

In another exemplary embodiment, the water flow-in rates may be obtained by adding the feedwater flow rate derived from signals generated by water flow measurement sensors (and temperature measurement sensors in the feedwater lines for density determination), and water flow-in rates from a control rod drive system.

In another exemplary embodiment, the water flow-in and steam flow-out comparison signal may be sent to a control room operator for BWR plant diagnostic purposes.

In an exemplary embodiment, the processor provides an on-line determination of any significant changes in moisture content by statistical evaluation of changes in flow rate measurements from the various steam lines at normal steady state operation.

In another exemplary embodiment, on-line information may be sent to a control room operator for BWR plant diagnostic purposes.

The present invention will become more fully understood from the detailed description and the accompanying drawings, wherein:

Fig. 1 is a schematic illustration of a boiling water reactor in accordance with an exemplary embodiment of the present invention;

Fig. 2 is a schematic illustration of a steam line system having a plurality of steam lines and associated flow measuring systems (FMSs) in accordance with an exemplary embodiment of the present invention; and

Fig. 3 is a schematic illustration of an exemplary steam line including an FMS in accordance with an exemplary embodiment of the present invention.

Areas of applicability of certain embodiments of the present invention will become apparent from the detailed description provided hereinafter. It should be understood that the detailed description and specific examples, while indicating the preferred embodiment of the invention, are intended for purposes of illustration only and are not intended to limit the scope of the invention.

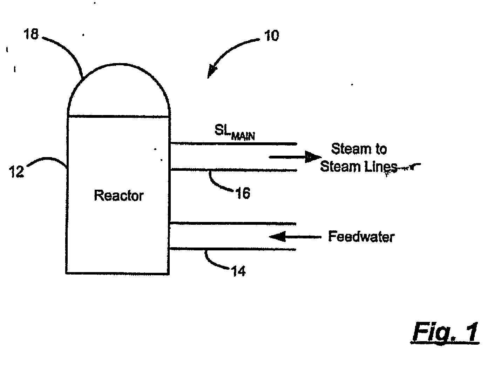

Referring now to Fig. 1, an exemplary boiling water reactor (BWR) 10 is schematically illustrated. The BWR 10 includes a reactor 12, a feedwater input 14 into the reactor (via several feedwater lines depicted functionally as a single line 14) and a main steam output 16 (via several main steam lines depicted functionally as a single line, $SL_{MAIN}$, 16) from the reactor 12. Water provided via the feedwater line 14 is boiled within the reactor 12 to produce steam. More specifically, water is circulated through a reactor core (not shown) and heat is transferred to the water from fuel assemblies or bundles (not shown). The steam rises toward the dome 18 of the reactor 12, where steam separators and dryers (not shown) remove water from the steam. The steam flows from the reactor 12 through a plurality of steam lines ($SL_1$, $SL_2$, ..., $SL_n$). The steam lines direct the steam through the turbine of electric generator to produce electricity. The steam undergoes a cooling process and is condensed back into water which is pumped back as feedwater to again cycle through the BWR 10.

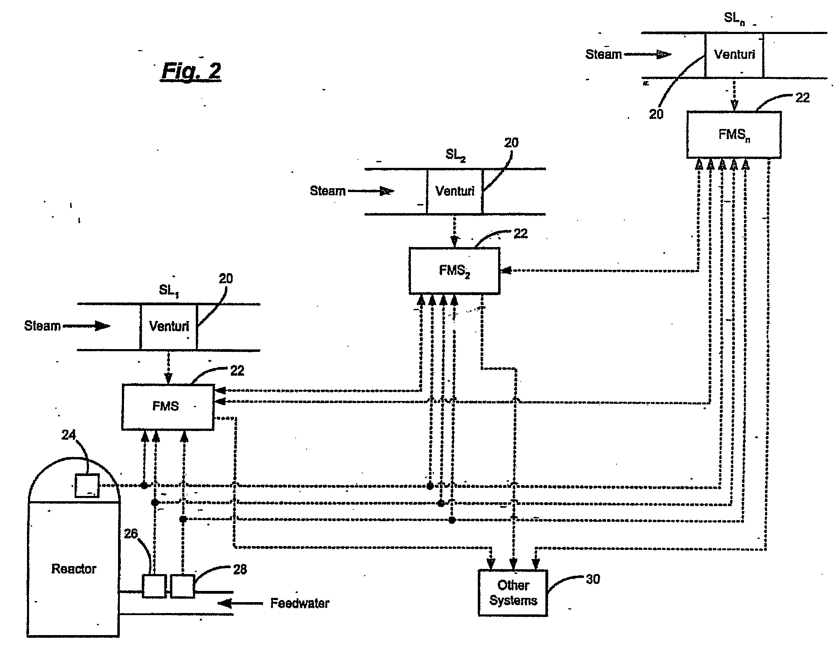

Referring now to Figure 2, each steam line ($SL_1$, $SL_2$,..., $SL_n$) 16 includes a venturi 20 disposed therein and an associated flow measuring system ($FMS_1$, $FMS_2$,..., $FMS_n$) 22. The FMSs 22 determine a steam flow rate through their respective steam lines. More specifically, each FMS 22 determines a steam flow rate and other diagnostic information based on pressures at the venturi 20, a dome pressure ($P_{DOME}$) detected by a dome pressure sensor 24, a feedwater temperature ($T_{FW}$) detected by a feedwater temperature sensor 26, a feedwater mass flow rate ($\dot{m}_{FW}$) detected by a mass flow rate sensor 28 and feedback from the other FMSs 22. The FMSs 22 provide steam flow rate signals to other systems 30 of the BWR. These other systems may include, but are not limited to, a safety system, a control system a process computer, and a control room operator console.

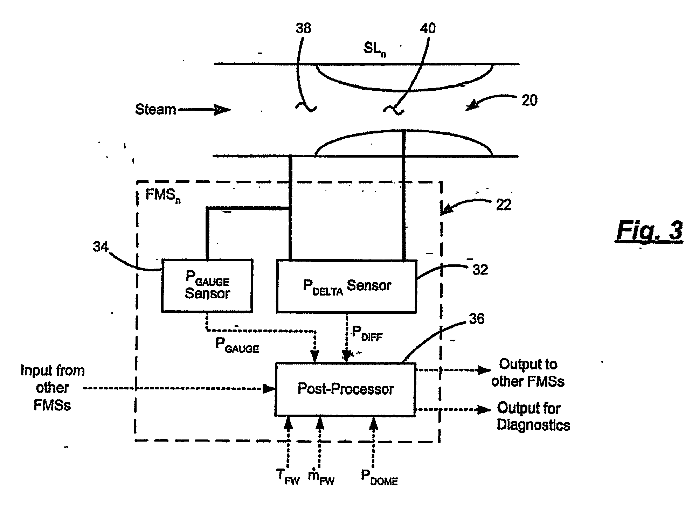

Referring now to Figure 3, one FMS 22 is illustrated in detail. The FMS 22 includes a pressure differential sensor 32, a gauge pressure sensor 34 and a post-processor 36. The pressure differential sensor 32 is in fluid communication with and is responsive to (1) an inlet pressure at an inlet 38 of the venturi 20 and (2) a throat pressure at a throat 40 of the venturi 20. The gauge pressure sensor 34 is in fluid communication with and is responsive to the inlet pressure at the inlet 38 of the venturi 20. The pressure differential sensor 32 generates a pressure differential ($P_{DIFF}$) signal based on the inlet pressure and the throat pressure. The gauge pressure sensor 34 generates a gauge pressure ($P_{GAUGE}$) signal based on the inlet pressure, and is corrected for velocity of the steam flowing past the inlet pressure tap.

The post-processor 36 receives both $P_{GAUGE}$ and $P_{DIFF}$. The post-processor 36 further receives steam flow rate information from the other FMSs 22, $T_{FW}$, $\dot{m}_{FW}$, and $P_{DOME}$. The post-processor 36 calculates the moisture in the steam using predetermined values of moisture in the dome 18 and implementing empirical formulas and thermodynamic relationships to determine the moisture content at the venturi inlet. In an alternative exemplary embodiment, the steam moisture input may be provided manually based on off-line measurements. The post-processor 36 uses closed-form empirical formulas to determine the density and adiabatic expansion factor corresponding to the pressure and moisture at the venturi 20. Alternatively the processor could use look-up tables based on the conventional ASME steam tables to calculate these steam properties. The post-processor 36 would then use these inputs and calculate the actual steam flow rate, as discussed in further detail below.

The post-processor 36 may determine the steam flow rate based on the following relationship:

$$\dot{m}_{STEAM} = \frac{1890.07 C Y d^2 F_a \sqrt{\rho_1 \Delta P}}{\sqrt{1 - \beta^4}}$$

where C is the coefficient of discharge, Y is the adiabatic expansion factor, d is the throat diameter of the venturi 20, $F_a$ is the thermal expansion factor of the venturi 20, $\rho$ is the mass density at the inlet and $\beta$ is the ratio of the throat diameter to the inlet diameter of the venturi 20. While most of the factors are constant, Y is dependent on the ratio of the throat pressure to the inlet pressure. The post-processor 36 may calculate Y based on the actual pressure and density at the venturi to provide a more accurate result for $\dot{m}_{STEAM}$.

The FMS 22 may also account for pressure loss at the venturi 20 as a result of pipe friction and steam velocity. More specifically, the post-processor 36 may calculate a pressure drop from the reactor 12 to the venturi inlet based on $P_{DOME}$ and $P_{GAUGE}$ and properly correcting the $P_{GAUGE}$ for steam flow past the mouth of the tap. The post-processor 22 may calculate the change in moisture content and steam density based on the pressure drop using empirical formulas and thermodynamic relationships, for example. Accordingly, the combined venturi pressure reading and adiabatic expansion factor provides a more accurate steam flow rate measurement.

The FMSs 22 may provide input to protection systems that trigger main steam isolation valve (MSIV) (not shown) isolation during high steam flow conditions. Isolation occurs when the MSIV is closed and inhibits steam flow through the main steam line. More specifically, by providing an accurate steam flow rate reading the MSIVs isolate one or more of the steam lines only when required. For example, a less accurate steam flow rate reading can result in superfluous isolation, which decreases the efficiency of the overall BWR system. Isolation is generally triggered when the steam flow rate achieves a predetermined set point (e.g., 140%). The FMS 22 corrects the steam flow rate for pressure and density at the set point to improve the operational margin and reduce the chance of spurious closure of the MSIV. For example, at 140% flow condition, the pressure drop correction would account for approximately a 4.4% error for just a 20 psi pressure drop.

The FMS 22 may also be used to improve understanding of abnormal steam flow situations. Such abnormal occurrences have been detected during conditions where there is high moisture steam in the steam lines. The FMS 22 may alert a plant operator to high moisture content conditions, which may occur as a result of steam dryer malfunction. In this manner, the FMS output may be used as a diagnostic to detect abnormal operation of upstream components such as a steam dryer or steam separator.

Further, because the FMS 22 provides an accurate steam flow rate measurement, normal plant control performance and set-point functions can be improved. A further benefit can be realized by improving the accuracy of the plant heat balance equation. Currently, the process computer makes the heat balance calculation using a default moisture value (e.g., 0.1%). A more accurate value, as provided by the FMS 22, would result in a more precise determination of the heat balance.

The FMS improves BWR control by providing a more accurate steam flow rate measurement. More specifically, the post-processor can correct the steam flow rate measurement for the mass density, pressure and moisture. The on-line steam flow rate calculated by the FMS is sent to the BWR control room and other pertinent control systems. The FMS can also provide a continuous on-line to choke flow by calculating the pressure differential for choke flow under the current steam conditions.

Exemplary embodiments of the present invention provide a system for measuring a steam flow rate through a conduit of a boiling water reactor (BWR). The system may include a first sensor that is configured to generate a pressure signal based on a pressure at an inlet of a venturi within the conduit, and a second sensor at the venturi throat that is configured to generate a delta pressure signal based on a pressure differential across the venturi. A processor determines the instantaneous steam flow rate in a steam line using the venturi $\Delta P$ signal and the signals from the pressure sensors in the BWR reactor dome and venturi inlet to compensate for the change in steam properties due to steam line pressure drop. The steam flow calculation would be based on solving the venturi $\Delta P$ equation in real-time, and may be significantly more accurate than the conventional steam flow instrumentation system based on the assumption that the flow is proportional to the square root of venturi $\Delta P$.

In another exemplary embodiment, the measured steam flow may be sent to a control system for improved automatic BWR feedwater and water level control.

In another exemplary embodiment, the processor for the accurate steam flow measured may be packaged and qualified for nuclear safety system (Class 1 E) application, and the steam flow signal may be sent to the plant protection system for automatically initiating plant protection functions when the steam flow rate exceeded pre-determined safety limits.

In another exemplary embodiment, the processor may continuously provide the margin to choke flow in the steam line. The processor provides a signal to be sent to a control room operator for BWR plant diagnostic purposes.

In another exemplary embodiment, the processor determines the total steam flow rate based on the measured individual steam flow rates, and compares the flow rate to the total of all the BWR water flow-in rates in order to provide a diagnostic tool to assure that water flow-in and steam flow-out mass flows match for normal steady state operation. The water flow-in rates may be obtained by adding the feedwater flow rate derived from signals generated by water flow measurement sensors (and temperature measurement sensors in the feedwater lines for density determination), and known small water flow-in rates from a control rod drive system. The water flow-in and steam flow-out comparison signal may be sent to a control room operator for BWR plant diagnostic purposes.

In another exemplary embodiment, the processor provides an on-line determination of any significant changes in moisture content by statistical evaluation of changes in flow rate measurements from the various steam lines at normal steady state operation. The information may be sent to a control room operator for BWR plant diagnostic purposes.

The description of the invention is merely exemplary in nature and, thus, numerous variations and modifications will be readily apparent and are intended to fall within the scope of the invention. Such variations are not to be regarded as a departure from the spirit and scope of the invention.

Various aspects and embodiments are defined by the following numbered clauses:

1. A system 22 for determining a steam flow rate through a conduit of a boiling water reactor (BWR), comprising:

a first sensor 34 configured to generate a pressure signal based on a pressure at an inlet of a venturi 20;
a second sensor 32 configured to generate a delta pressure signal based on a pressure differential across the venturi; and
a processor 36 that determines an instantaneous steam flow rate based on the pressure signal and the delta pressure signal.

2. The system according to clause 1, wherein the processor determines a pressure drop from a pressure within a reactor dome 18 of the BWR to the pressure at the inlet of the venturi and compensates the steam properties based on the pressure signal, the delta pressure signal and the pressure drop to calculate the steam flow rate.

3. The system according to clause 1, wherein the measured steam flow rate is used for more accurate feedwater and water level control.

4. The system according to clause 3, wherein the feedwater and control rod drive water flow-in rate is compared to the measured steam flow-out rate during normal steady state operation.

5. The system according to clause 4, wherein the water flow-in and the steam flow-out mass flow comparison signals is sent to a control room operator for BWR plant diagnostics.

6. The system according to clause 1, wherein the measured steam flow rate provides a signal for automatically initiating plant protection functions when the steam flow rate exceeds pre-determined limits.

7. The system according to clause 1, wherein the measured steam flow rate determines a margin to choke flow in a steam line.

8. The system according to clause 7, wherein the margin to choke flow is continuously monitored in real-time and sent to a control room operator for BWR plant diagnostics.

9. The system according to clause 1, wherein the steam moisture content is measured on-line during steady state operation.

10. The system according to clause 9, wherein the on-line steam moisture content measurement is sent to a control room operator for BWR plant diagnostics.

11. A method of measuring a steam flow rate through a conduit of a boiling water reactor (BWR), comprising:

determining an inlet pressure ($P_{GAUGE}$) at an inlet of a venturi 20 disposed within a steam line;

determining a pressure differential ($P_{DIFF}$) across the venturi; and

determining an instantaneous steam flow rate based on the inlet pressure and the pressure differential.

12. The method according to clause 9, further comprises:

determining a pressure drop from a pressure within a reactor dome 18 of the BWR to the pressure at the inlet of the venturi; and
compensating the steam properties based on the pressure differential, the inlet pressure and the pressure drop to calculate the steam flow rate.

13. The method according to clause 9, further comprises:

using the determined steam flow rate to for more accurate feedwater and water level control.

14. The method according to clause 11, further comprises:

comparing the determined feedwater and control rod drive water flow-in rate with the determined steam flow-out rate during normal steady state operation.

15. The method according to clause 12, wherein the compared signal is sent to a control room operator for BWR plant diagnostics.

16. The method according to clause 12, wherein steam moisture contents are measured on-line during steady state operation.

17. The method according to clause 16, wherein the on-line steam moisture content measurement is sent to a control room operator for BWR plant diagnostics.

18. The method according to clause 9, further comprises:

> automatically initiating plant protection functions when the steam flow rate exceeds pre-determined limits.

19. The method according to clause 9, wherein the steam flow rate is continuously monitored in real-time to a control room operator for BWR plant diagnostic.

20. A system 22 for measuring a steam flow rate through a plurality of steam lines of a boiling water reactor (BWR), comprising:

> a first flow measuring system $FMS_1$ that determines the steam flow rate within a first steam line, including:

>> a first sensor 34 configured to generate a pressure signal based on a pressure at an inlet of a first venturi 20 disposed within the first steam line;
>> a second sensor 32configured to generate a delta pressure signal based on a pressure differential across the first venturi; and
>> a first processor 36 that determines an instantaneous steam flow rate based on the pressure signal, the delta pressure signal and a steam flow rate signal generated by other flow measuring devices 30 associated with another steam line; and

> a second flow measuring system $FMS_2$ that determines the steam flow rate within a second steam line, including:

>> a third sensor 34 configured to generate a pressure signal based on a pressure at an inlet of a second venturi disposed within the second steam line;
>> a fourth sensor 32 configured to generate a delta pressure signal based on a pressure differential across the second venturi; and
>> a second processor 36 that determines an instantaneous steam flow rate based on the pressure signal, the delta pressure signal and a steam flow rate signal generated by other flow measuring devices associated with another steam line.

## PARTS LIST

| Ref. No. | Name |
|---|---|
|  |  |
| 10 | BWR |
| 12 | Reactor |
| 14 | Feed Water Input |
| 16 | Main Steam Output |
| 18 | Reactor Dome |
| 20 | Venturi |
| 22 | Flow Measuring System (FMS) |
| 24 | Dome Pressure Sensor |
| 26 | Feed Water Temperature Sensor |
| 28 | Mass Flow Rate Sensor |
| 30 | Other Systems |
| 32 | Pressure Differential Sensor |
| 34 | Gauge Pressure Sensor |
| 36 | Post-Processor |
| 38 | Inlet |
| 40 | Throat |

## Claims

1. A device (22) for measuring instantaneous steam flow rate in a nuclear reactor (10), comprising:

> a first sensor (34) for measuring pressure at an inlet (38) of a venturi (20);
> a second sensor (32) for measuring a pressuring differential across the venturi; and
> a processor (36) for calculating instantaneous steam flow rate based on the measured inlet pressure and pressure differential.

2. The device (22) of claim 1, wherein the processor (36) generates control signals based on at least one of a plurality of inputs.

3. The device (22) of claim 2, wherein the at least one of a plurality of inputs includes feed water temperature input, feed water mass flow input, dome pressure input, and input from additional processors.

4. The device (22) of any preceding claim, wherein the processor (36) receives steam line moisture input.

5. The device (22) of claim 4, wherein the processor (36) determines the moisture content at the venturi inlet based on the steam line moisture input.

**6.** The device (22) of claim 5, wherein the processor (36) determines the density and adiabatic expansion factor based on the pressure and moisture content at the venturi inlet.

**7.** The device (22) of claim 6, wherein the processor (36) calculates the instantaneous steam flow rate based on the determined density and adiabatic expansion factor.

**8.** The device (22) of claim 7, wherein the processor (36) outputs the instantaneous steam flow rate to at least one of a plurality of control systems.

**9.** A method of determining instantaneous steam flow rate in a nuclear reactor (10), comprising:

> calculating an instantaneous steam flow rate at a given time based on a received current pressure value at an inlet (38) of a venturi (20) and a current pressure differential value across the venturi.

**10.** The method of claim 9, wherein the calculating includes determining the density and adiabatic expansion factor based on the pressure and moisture content at the venturi inlet (38), and calculates the instantaneous steam flow rate based on the determined density and adiabatic expansion factor.

**11.** A method of determining instantaneous steam flow rate in a nuclear reactor (10), comprising:

> receiving a current pressure value of an inlet (38) of a venturi (20), a current moisture content value of the inlet of the venturi, and a current pressure differential value across the venturi;
> determining a density and an adiabatic expansion factor based on the pressure and moisture content at the venturi inlet (38);
> calculating the instantaneous steam flow rate with the density and the adiabatic expansion factor and the current pressure differential value;
> outputting control signals based at least in part on the calculated instantaneous steam flow rate.

EP 1 770 716 A2

_Fig. 1_

Fig. 2

EP 1 770 716 A2

Fig. 3